# EUROPÄISCHE PATENTSCHRIFT

(11) **EP 1 170 112 B1**
(45) Veröffentlichungstag und Bekanntmachung des Hinweises auf die Patenterteilung: **29.05.2002**
(21) Anmeldenummer: 00114393.2
(22) Anmeldetag: 05.07.2000
(51) Int. Cl.: B29C 47/88

(54) **Kühlring**
Air cooling ring for plastic film
Anneau de refroidissement par air d'un film plastique

(43) Veröffentlichungstag der Anmeldung: 09.01.2002
(73) Patentinhaber: Plast-Control Gerätebau GmbH, 42899 Remscheid (DE)
(72) Erfinder: Raiko, Vadim, Dr. Ing., 42117 Wuppertal (DE); Konermann, Stefan, 42897 Remscheid (DE)
(74) Vertreter: Wiebusch, Manfred

(56) Entgegenhaltungen:
- EP-A- 0 478 641
- US-A- 5 676 893
- PATENT ABSTRACTS OF JAPAN vol. 012, no. 045 (M-667), 10. Februar 1988 (1988-02-10) -& JP 62 198433 A (BANDO CHEM IND LTD), 2. September 1987 (1987-09-02)

## Beschreibung

Die Erfindung betrifft einen Kühlring für Blasfolienanlagen, mit einer Ringkammer, die an einem Umfangsrand einen Austrittsspalt zur Abgabe eines Kühlmediums auf die Folienblase bildet und durch radiale Stege in mehrere Segmente unterteilt ist, und mit Einbauten zur Vergleichmäßigung der Strömung des Kühlmediums in den einzelnen Segmenten.

Ein Kühlring dieser Art wird in EP-B-0 478 641 beschrieben. Dieser Kühlring dient zur Zufuhr von Außenkühlluft zu der Folienblase und weist demgemäß einen die Folienblase umgebenden Austrittsspalt am inneren Umfangsrand auf. Durch Steuerung oder Regelung des Kühlluftdurchsatzes durch die einzelnen Segmente ist es möglich, die Kühlwirkung segmentweise zu intensivieren oder abzuschwächen. Da die frisch extrudierte Folie durch Zufuhr von Blasluft in das Innere der Folienblase verstreckt wird, führt eine intensivere Kühlung zu einer schnelleren Zunahme der Viskosität der Schmelze und damit zu einer geringeren Streckung der Folie und folglich zu einer größeren Foliendicke, während umgekehrt eine Abschwächung der Kühlung zu einer Reduzierung der Foliendicke führt. Auf diese Weise läßt sich durch die segmentweise Regelung der Kühlluftzufuhr das Dickenprofil der Folie gezielt beeinflussen und vergleichmäβigen. Die Stege zwischen den einzelnen Segmenten haben den Zweck, die Kühlluftströmungen in den einzelnen Segmenten bis in die Nähe des Austrittsspaltes voneinander getrennt zu halten, so daß es nicht zu einem vorzeitigen Ausgleich der unterschiedlichen Kühlluftdurchsätze kommt.

Andererseits haben die Stege jedoch aufgrund von Reibungseffekten und/oder aufgrund einer Verwirbelung der Kühlluftströmung unvermeidlich den Effekt, daß sie ihrerseits die Geschwindigkeitsverteilung der Kühlluftströmung und damit die Kühlwirkung beeinflussen. Unter bestimmten Bedingungen, beispielsweise bei besonders empfindlichen Folien, kann dies zur Folge haben, daß die Foliendicke in Umfangsrichtung des Folienschlauches zwar insgesamt relativ gleichförmig ist, aber dennoch eine gewisse Modulation entsprechend der Anordnung der Stege des Kühlrings aufweist. Um diesen Effekt zu mildern wird in der genannten Veröffentlichung bereits vorgeschlagen, die Kühlluftströmung durch Einbauten zu vergleichmäßigen, so daß sich der Effekt der Stege weniger bemerkbar macht. Diese Einbauten werden beispielsweise durch radiale Stege gebildet, die jedes Segment in eine Anzahl schmalere Teilsegmente unterteilen. In der Praxis konnte mit den bisher vorgeschlagenen Maßnahmen jedoch keine wirksame Vergleichmäßigung der Kühlluftströmung erreicht werden.

Aufgabe der Erfindung ist es deshalb, einen Kühlring der eingangs genannten Art zu schaffen, mit dem sich eine gleichmäßigere Umfangsverteilung der Kühlluftströmung erreichen läßt.

Diese Aufgabe wird erfindungsgemäß dadurch gelöst, daß die Einbauten schräg zur Radialrichtung angeordnete Ablenkplatten aufweisen, die einen Teil des Kühlmediums aus den jeweiligen mittleren Bereichen der Segmente zu den Stegen hin ablenken.

Die Ablenkplatten haben in Verbindung mit den Stegen des Kühlrings die Wirkung von Düsen, durch die die Ausströmgeschwindigkeit der Kühlluft erhöht wird. Dies führt jedoch nicht, wie man annehmen könnte, zu einer weiteren Verungleichmäßigung der Kühlluftströmung, sondern erweist sich vielmehr als eine wirkungsvolle Maßnahme zum Ausgleich der Störungen, die durch die Stege allein hervorgerufen werden. Durch die Ablenkplatten erhält die Kühlluftströmung eine Geschwindigkeitskomponente in Umfangsrichtung des Kühlrings, und ein Teil der Kühlluft wird somit in den "Windschatten" hinter den stromabwärtigen Enden der Stege abgelenkt. Im Ergebnis erhält man so eine Geschwindigkeitsverteilung der Kühlluftströmung, die in Umfangsrichtung des Kühlrings wesentlich gleichmäßiger ist als bei dem herkömmlichen Kühlring. Dieser vorteilhafte Effekt läßt sich sowohl bei laminarer als auch bei turbulenter Strömung des Kühlmediums erreichen.

Vorteilhafte Ausgestaltungen ergeben sich aus den Unteransprüchen.

Grundsätzlich ist es möglich, den Anstellwinkel, die Position oder die Länge der Ablenkplatten in Abhängigkeit von der Strömungsgeschwindigkeit des Kühlmediums zu variieren. Es zeigt sich jedoch, daß der optimale Anstellwinkel der Ablenkplatten, mit dem ein weitgehend gleichmäßiges Strömungsprofil erreicht wird, innerhalb des Bereiches, in dem die Strömungsgeschwindigkeiten während des normalen Betriebs des Kühlrings variieren, kaum von der Strömungsgeschwindigkeit abhängig ist, so daß sich der gewünschte Effekt mit starr angeordneten Ablenkplatten und einem entsprechend einfachen Aufbau des Kühlrings erreichen läßt.

Vorzugsweise schließt sich an jede schräg angestellte Ablenkplatte stromabwärts eine radial verlaufende Leitplatte an, die der durch die Düsenwirkung beschleunigten Kühlluftströmung wieder eine annähernd radiale Richtung gibt.

Herkömmliche Kühlringe weisen typischerweise im äußeren Umfangsbereich eine ringförmige Verteilerkammer auf, in der sich die mit Hilfe eines Gebläses zugeführte Kühlluft gleichmäßig verteilt, bevor sie unter Überwindung einer Staustufe in die radial verlaufenden Segmente des Kühlrings eintritt. In diesem Fall ergibt sich innerhalb jedes Segments ein Strömungsprofil, das im wesentlichen symmetrisch zur Längsachse des Segments ist. Auch die Einbauten sind in diesem Fall symmetrisch zur Längsachse des Segments angeordnet.

Es ist jedoch auch möglich, das Kühlmedium am äußeren Umfang des Kühlrings tangential zuzuführen, so daß die Kühlluft bei ihrem Eintritt in die radial verlaufenden Segmente noch eine auf dem gesamten Umfang im wesentlichen einheitliche Geschwindigkeitskomponente in Umfangsrichtung aufweist. In diesem Fall ergibt sich innerhalb jedes Segments ein asymmetrisches Strömungsprofil, das dann durch eine entsprechende asymmetrische Anordnung der Ablenkplatten vergleichmäßigt und zugleich weitgehend symmetrisiert wird.

Bei symmetrischer Anordnung der Einbauten ist jedem der beiden Stege, die ein Segment begrenzen, eine Ablenkplatte zugeordnet, die mit dem betreffenden Steg eine Düse bildet. Zwischen den beiden Ablenkplatten wird dann ein Diffusor gebildet, der sich stromabwärts erweitert und so bewirkt, daß die Strömungsgeschwindigkeit der Kühlluft im mittleren Bereich des Segments herabgesetzt wird. Wahlweise können durch mehrere Paare von Ablenkplatten auch mehrere ineinander geschachtelte Diffusoren gebildet werden, die eine noch genauere Steuerung des Geschwindigkeitsprofils ermöglichen. Außerdem können die Einbauten auch gerade, radial verlaufende Leitplatten umfassen, die jedes Segment in mehrere Teilsegmente unterteilen. Auf jeder Seite der Leitplatte kann dann zusammen mit einer der Ablenkplatten ein Diffusor gebildet werden. Es ist jedoch auch möglich, in jedem Teilsegment zwei in entgegengesetzte Richtungen angestellte Ablenkplatten anzuordnen, die zwischen sich einen Diffusor bilden. Die Wände des Teilsegments, die entweder durch einen Steg oder durch eine Leitplatte gebildet werden, bilden dann jeweils zusammen mit einer der Ablenkplatten eine Düse.

Die Ablenkplatten sind vorzugsweise in der Nähe der stromabwärtigen Enden der Stege angeordnet. Sie können jedoch auch in gewissem Abstand stromabwärts oder stromaufwärts der stromabwärtigen Enden der Stege angeordnet sein.

Im folgenden werden Ausführungsbeispiele der Erfindung anhand der Zeichnungen näher erläutert.

Es zeigen:
- Fig. 1: einen radialen Schnitt durch einen Kühlring am Umfang einer Folienblase;
- Fig. 2: einen horizontalen Teilschnitt durch den Kühlring nach Fig. 1; und
- Fig. 3 - 7: Teilschnitte durch Kühlringe gemäß abgewandelten Ausführungsformen der Erfindung.

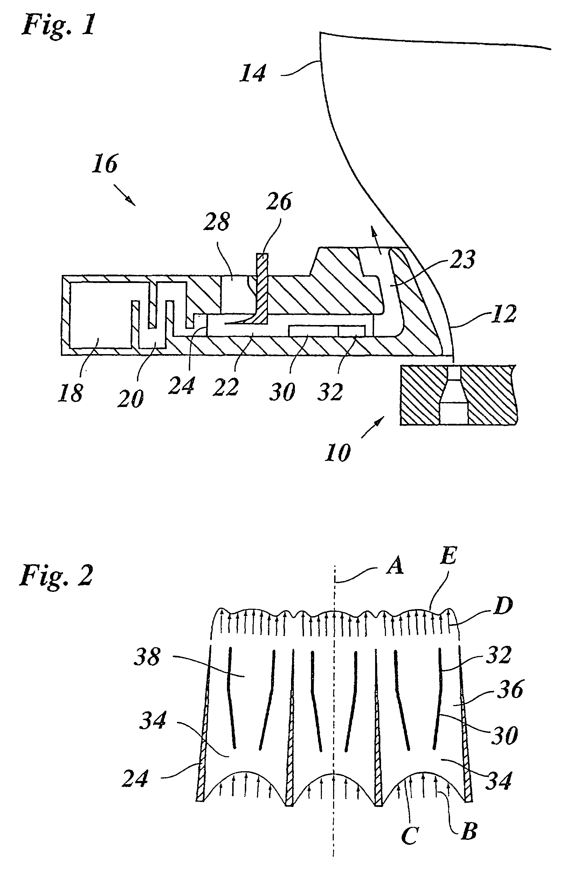

In Fig. 1 ist in einem vertikalen Teilschnitt ein ringförmiges Extrusionswerkzeug 10 dargestellt, aus dem Kunststoffschmelze 12 in der Form eines Folienschlauches extrudiert wird. Durch Einblasen von Innenluft wird dann der Folienschlauch in bekannter Weise zu einer Folienblase 14 aufgeweitet, so daß das Folienmaterial vor dem Erstarren verstreckt wird. Um das Erstarren des Folienmaterials zu beschleunigen, wird die Folienblase 14 in der Verstreckungszone von außen mit Kühlluft angeblasen. Zu diesem Zweck ist die Folienblase von einem Kühlring 16 umgeben, mit dem eine gleichmäßige Kühlluftzufuhr auf dem gesamten Umfang der Folienblase erreicht werden soll.

Der Kühlring 16 weist im äußeren Umfangsbereich eine ringförmig umlaufende Verteilerkammer 18 auf, in die ein Kühlmedium, beispielsweise Luft, mit Hilfe eines oder mehrerer nicht gezeigter Gebläse zugeführt wird. Die Verteilerkammer 18 ist über mehrere Staustufen 20 mit einer weiter innen gelegenen Ringkammer 22 verbunden, die am inneren Umfangsrand in einen aufwärts gerichteten Austrittsspalt 23 übergeht. Je stärker die Kühlluftströmung am Austrittsspalt 23 ist, desto stärker ist die Kühlwirkung auf die Folienblase, und desto größer ist folglich die Dicke, die das Folienmaterial nach dem Erstarren der Schmelze in dem betreffenden Umfangsbereich der Folienblase behält.

Durch die Staustufen 20 wird der Strömungswiderstand für die Kühlluft so weit erhöht, daß sich etwaige Druckunterschiede in der Verteilerkammer 18 abbauen können, bevor die Kühlluft in einer radial einwärts gerichteten Strömungsbewegung in die Ringkammer 22 gelangt. Auf diese Weise wird eine weitgehend gleichmäßige Strömungsverteilung auf dem gesamten Umfang der Folienblase 14 erreicht. Allerdings können geringfügige Maßtoleranzen bei der Fertigung des Kühlrings 16 dazu führen, daß die Strömungsverteilung geringfügig von der angestrebten gleichförmigen Verteilung abweicht, mit der Folge, daß die Folie nach dem Erstarren in Umfangsrichtung der Folienblase 14 gesehen eine Folge von Dickstellen und Dünnstellen aufweist. Solche Dickstellen oder Dünnstellen können auch durch andere Einflüsse hervorgerufen werden, beispielsweise durch einen Luftzug in dem Raum, in dem die Anlage installiert ist. Ebenso können Fehler des Extrusionswerkzeugs 10 dazu führen, daß der Folienschlauch bereits bei der Extrusion gewisse Dickenungleichförmigkeiten aufweist, die dann beim Verstrecken mit gleichförmig verteilter Kühlluft noch verstärkt würden.

Damit solche unerwünschten Einflüsse auf das Dickenprofil der Folie ausgeregelt werden können, ist der Kühlring 16 durch radial in der Ringkammer 22 angeordnete Stege 24 in mehrere Segmente unterteilt, und die Kühlluftströmungen in den einzelnen Segmenten sind unabhängig voneinander steuerbar. Im gezeigten Beispiel ist zu diesem Zweck in jedem Segment eine höhenverstellbare Leitschaufel 26 angeordnet, die einen Teil der Kühlluftströmung zu einer in der Decke des Kühlrings ausgebildeten Entlüftungsöffnung 28 ablenkt. Auf diese Weise läßt sich der Kühlluftdurchsatz durch das betreffende Segment variieren, ohne daß sich ein erhöhter Staudruck aufbaut, der über die Verteilerkammer 18 auf die Kühlluftdurchsätze in den benachbarten Segmenten zurückwirken könnte. Beispiele für andere Maßnahmen zur segmentweisen Beeinflussung der Kühlwirkung sind die Zufuhr von Zusatzkühlluft, eine Einfache Drosselung der Kühlluftströmung oder die Beheizung oder Kühlung der Luft in jedem Segment. Eine nicht gezeigte Meßeinrichtung zur Messung des Dickenprofils im oberen Bereich der Folienblase ermöglicht die segmentweise Regelung der Kühlwirkung in einem geschlossenen Regelkreis.

Stromabwärts der Leitschaufeln 26 sind Ablenkplatten 30 und Leitplatten 32 in jedes Segment des Kühlrings eingebaut. Damit diese Ablenk- und Leitplatten deutlicher zu erkennen sind, illustriert Fig. 1 ein Ausführungsbeispiel, bei dem die Ablenkplatten 30 und die Leitplatten 32 vom Boden der Ringkammer 22 aufragen, sich jedoch nur über einen Teil der Gesamthöhe der Ringkammer erstrecken. In der Praxis wird jedoch vorzugsweise eine Ausführungsform benutzt, bei der sich die Ablenkplatten 30 und die Leitplatten 32 über die gesamte Höhe der Ringkammer 22 erstrecken und somit bis zur Decke der Ringkammer reichen.

Zur Illustration der Wirkungsweise der Ablenkplatten 30 und der Leitplatten 32 zeigt Fig. 2 einen schematischen horizontalen Teilschnitt durch drei benachbarte Segmente 34 der Ringkammer 22. Man erkennt hier, daß die Stege 24, die die einzelnen Segmente 34 voneinander trennen, nach innen, also zur Mitte des Kühlrings hin, keilförmig verjüngt sind, so daß die radial von außen nach innen verlaufenden Segmente 34 auf ihrer gesamten Länge eine gleichbleibende Breite aufweisen. Da Fig. 2 nur den stromabwärtigen (radial inneren) Bereich der Segmente 34 zeigt, sind die Leitschaufeln 26 und die Lüftungsöffnungen 28 hier nicht zu erkennen. In jedem Segment 34 sind gemäß Fig. 2 zwei Ablenkplatten 30 und zwei Leitplatten 32 vorgesehen, die jeweils symmetrisch zur Längsmittelachse A des betreffenden Segments angeordnet sind. Die Ablenkplatten 30 sind dabei derart schräg in bezug auf die Längsachse des Segments angestellt, daß sie in Strömungsrichtung gesehen nach außen verlaufen und sich somit dem benachbarten Steg 24 annähern. Die Leitplatten 32 schließen sich stetig an die stromabwärtigen Enden der Ablenkplatten 30 an und verlaufen wieder parallel zur Längsrichtung des Segments. Zwischen jedem Paar aus Ablenkplatte 30 und zugehöriger Leitplatte 32 und dem auf derselben Seite liegenden Steg 24 wird somit eine Düse 36 gebildet, die sich in Strömungsrichtung der Kühlluft verjüngt. Andererseits wird zwischen den beiden Ablenkplatten 30 jedes Segments ein Diffusor 38 gebildet, der sich in Strömungsrichtung der Kühlluft erweitert.

In Fig. 2 wird die ursprüngliche Verteilung der Strömungsgeschwindigkeiten auf der Breite der Segmente 24 durch Pfeile B und durch eine Kurve C symbolisiert. Nach dem Gesetz von Hagen-Poiseuille ergibt sich (für laminare Strömungen) näherungsweise eine parabelförmige Strömungsverteilung, wie sie durch die Kurve C angegeben wird. Ohne die Einbauten in den Segmenten 34 bliebe diese Strömungsverteilung bis zu den stromabwärtigen Enden der Stege 24 erhalten, und erst noch weiter stromabwärts könnte es zu einem gewissen Ausgleich der unterschiedlichen Strömungsgeschwindigkeiten kommen. Dabei könnten sich jedoch unter Umständen an der Folienblase 14 immer noch gewisse Unterschiede in den Strömungsgeschwindigkeiten ergeben, insbesondere eine Abnahme der Strömungsgeschwindigkeit in den Bereichen, die im "Windschatten" der einzelnen Stege 24 liegen.

Durch die eingebauten Ablenkplatten 30 und Leitplatten 32 wird nun in jedem Segment ein Teil der Kühlluft, die mit hoher Geschwindigkeit und hohem Durchsatz durch den in der Nähe der Längsmittelachse A gelegenen Bereich des Segments strömt, nach außen abgelenkt. Somit ergibt sich durch die Wirkung der Düsen 36 eine deutliche Zunahme der Strömungsgeschwindigkeit in den unmittelbar an die Stege 24 angrenzenden Bereichen und umgekehrt durch die Wirkung der Diffusoren 38 eine deutliche Abnahme der Strömungsgeschwindigkeit im mittleren Bereich des Segments. Wenn sich die Kühlluftströmungen aus den einzelnen Segmenten dann hinter den stromabwärtigen Enden der Stege 24 vereinigen, erhält man ein Strömungsprofil, wie es durch Pfeile D und eine Kurve E in Fig. 2 veranschaulicht wird.

Aufgrund der hohen Strömungsgeschwindigkeiten und Durchsätze in den Bereichen auf beiden Seiten jedes Steges, die dem Steg unmittelbar benachbart sind, kommt es hinter den stromabwärtigen Enden der Stege zunächst zu einem starken Strömungsgradienten und damit zu einem raschen Ausgleich der Geschwindigkeitsunterschiede. An der Folienblase erhält man so eine weitgehend gleichmäßige Strömungsverteilung oder zumindest eine Strömungsverteilung, die in Umfangsrichtung weitaus schwächer moduliert ist als die Strömungsverteilung, die sich ohne die Einbauten ergäbe. Dementsprechend läßt sich bei korrekter Ausregelung der einzelnen Segmente eine Blasfolie mit einem sehr gleichförmigen Dickenprofil herstellen, die höchsten Qualitätsansprüchen genügt.

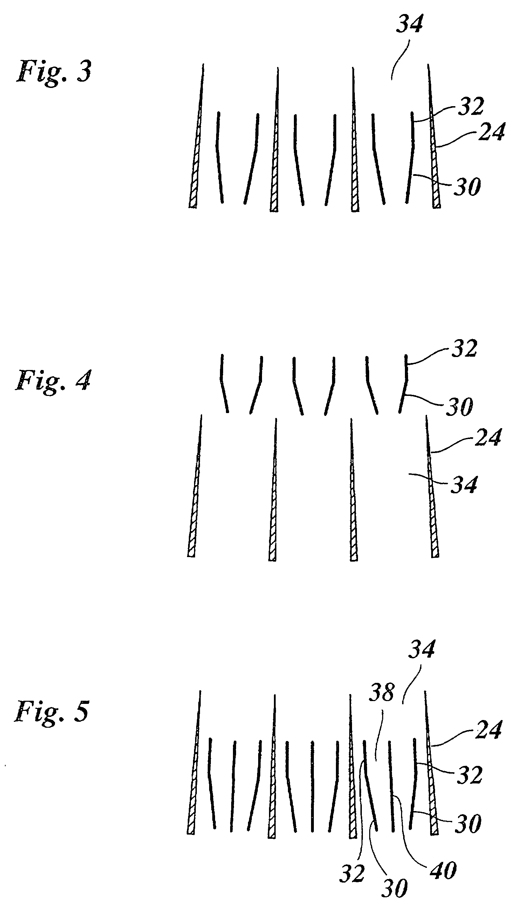

Fig. 3 bis 7 illustrieren abgewandelte Ausführungsbeispiele der Erfindung.

In Fig. 3 sind die Ablenkplatten 30 und die Leitplatten 32 weiter stromaufwärts in den einzelnen Segmenten 34 angeordnet, so daß hinter den stromabwärtigen Enden der Leitplatten 32 ein Beruhigungsraum entsteht, in dem sich die Strömungsprofile innerhalb der einzelnen Segmente 34 etwas ausgleichen können, bevor sie am Ende der Stege 24 miteinander vereinigt werden.

Umgekehrt ist es auch möglich, die Ablenkplatten 30 und die Leitplatten 32 in Strömungsrichtung hinter den stromabwärtigen Enden der Stege 24 anzuordnen, wie schematisch in Fig. 4 dargestellt ist. In diesem Fall läßt sich die Strömung durch die Ablenkplatten 30 besonders wirksam in den "Windschatten" hinter den Stegen 24 ablenken. Zu einer Düsenwirkung kommt es hier jeweils durch das Zusammenwirken zweier benachbarter Ablenkplatten, die zu verschiedenen Segmenten gehören.

In Fig. 4 ist angenommen, daß die Stege 24 nur im radial äußeren Bereich der Ringkammer 22 ausgebildet sind, so daß hinter den Stegen innerhalb der Ringkammer noch ausreichend Raum für die Anordnung der Ablenkplatten 30 und der Leitplatten 32 verbleibt. In einer modifizierten Ausführungsform könnten die Ablenkplatten 30 und die Leitplatten jedoch auch in dem im wesentlichen nach oben gerichteten Austrittsspalt 23 angeordnet sein.

Fig. 5 illustriert eine Ausführungsform mit einer größeren Anzahl von Einbauten je Segment. Zusätzlich zu den paarweise angeordneten Ablenkplatten 30 und Leitplatten 32 ist hier auf der Mittelachse jedes Segments eine gerade durchgehende Leitplatte 40 vorgesehen, die das Segment 34 in zwei Teilsegmente unterteilt und mit jeder der beiden Ablenkplatten 30 einen Diffusor 38 bildet. Wahlweise könnten in jedem der durch die Leitplatte 40 begrenzten Teilsegmente auch zwei Paare von Ablenkplatten 30 und Leitplatten 32 analog zu der Anordnung gemäß Fig. 2 bis 4 vorgesehen sein. In diesem Fall würde die gerade Leitplatte 40 jeweils mit der ihr am nächsten liegenden Ablenkplatte eine Düse bilden.

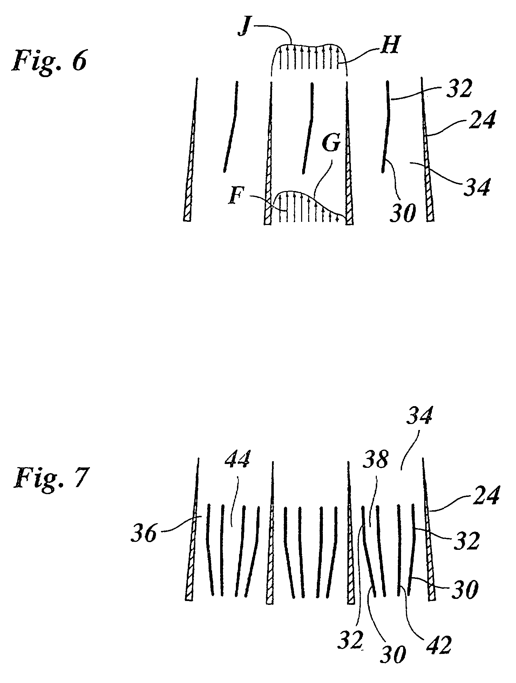

Bei den bisher beschriebenen Ausführungsbeispielen wurde davon ausgegangen, daß in jedem Segment 34 bereits stromaufwärts der Ablenkplatten 30 eine symmetrische Strömungsverteilung herrscht. Dementsprechend sind bei den Ausführungsbeispielen gemäß Fig. 2 bis 5 die Einbauten auch stets symmetrisch in jedem Segment angeordnet. Grundsätzlich ist es jedoch auch denkbar, daß die einzelnen Segmente 34 asymmetrisch geformt sind, so daß stromaufwärts der Ablenkplatten 30 eine asymmetrische Strömungsverteilung vorliegt. Eine solche asymmetrische Strömungsverteilung könnte auch bei symmetrischem Aufbau der Segmente dadurch hervorgerufen werden, daß die Kühlluft drallförmig durch die Verteilerkammer 18 strömt und folglich mit einer Tangentialkomponente in die Segmente 34 eintritt. Eine solche asymmetrische Strömungsverteilung wird in Fig. 6 durch Pfeile F und eine Kurve G symbolisiert. Durch eine asymmetrische Anordnung von Einbauten, beispielsweise eine einzige Ablenkplatte 30 und eine einzige Leitplatte 32 in jedem Segment 34, läßt sich dann auslaßseitig wieder ein vergleichmäßigtes und zugleich symmetrisiertes Strömungsprofil erreichen, wie es durch Pfeile H und eine Kurve J in Fig. 6 illustriert wird.

Fig. 7 zeigt schließlich wieder eine symmetrische Anordnung, bei der jedoch in jedem Segment 34 ein Paar äußerer Ablenkplatten 30 und zusätzlich ein Paar innerer Ablenkplatten 42 mit kleinerem Anstellwinkel vorgesehen ist, so daß ineinander geschachtelte Diffusoren 38, 44 gebildet werden.

## Patentansprüche

1. Kühlring für Blasfolienanlagen, mit einer Ringkammer (22), die an einem Umfangsrand einen Austrittsspalt (23) zur Abgabe eines Kühlmediums auf die Folienblase (14) bildet und durch radiale Stege (24) in mehrere Segmente (34) unterteilt ist, und mit Einbauten (30, 32, 40) zur Vergleichmäßigung der Strömung des Kühlmediums in den einzelnen Segmenten (34), **dadurch gekennzeichnet, daß** die Einbauten schräg zur Radialrichtung angeordnete Ablenkplatten (30) aufweisen, die einen Teil des Kühlmediums aus den jeweiligen mittleren Bereichen der Segmente (34) zu den Stegen (24) hin ablenken.

2. Kühlring nach Anspruch 1, mit einer Einrichtung (26, 28) zur segmentweisen Beeinflussung der Strömungsgeschwindigkeit und/oder Temperatur des Kühlmediums.

3. Kühlring nach Anspruch 1 oder 2, bei dem der Austrittsspalt (23) am inneren Umfangsrand der Ringkammer (22) gebildet wird und jedes Segment (34) durch keilförmig zum stromabwärtigen Ende zusammenlaufende Stege (24) begrenzt wird und auf seiner Länge eine im wesentlichen gleichbleibende Breite hat.

4. Kühlring nach einem der vorstehenden Ansprüche, bei dem sich an jede Ablenkplatte (30) stromabwärts eine parallel zur Längsachse (A) des Segments (34) verlaufende Leitplatte (32) anschließt.

5. Kühlring nach einem der vorstehenden Ansprüche, bei dem die Einbauten gerade Leitplatten (40) umfassen, die jedes Segment (34) in mehrere Teilsegmente unterteilen, und bei dem mindestens eine Ablenkplatte (30) in jedem Teilsegment angeordnet ist.

6. Kühlring nach einem der vorstehenden Ansprüche, bei dem die Einbauten (30, 32, 40) symmetrisch zur Längsmittelachse (A) des betreffenden Segments (34) angeordnet sind.

7. Kühlring nach einem der Ansprüche 1 bis 5, bei dem innerhalb jedes Segments (34) stromaufwärts der Einbauten (30, 32) eine asymmetrische Strömungsverteilung (F, G) vorliegt und die Einbauten (30, 32) asymmetrisch zur Längsmittelachse des betreffenden Segments angeordnet sind.

8. Kühlring nach einem der vorstehenden Ansprüche, bei dem jedes Segment (34) mehrere Ablenkplatten (30, 42) mit unterschiedlichen Anstellwinkeln aufweist.

## Claims

1. Cooling ring for blown-film apparatus, having an annular chamber (22) which, at a peripheral edge, forms an outlet opening (23) for discharging a cooling medium onto the blown film (14) and which is subdivided into a plurality of segments (34) by radial webs (24), and having baffles (30, 32, 40) for smoothing the flow of the cooling medium in the individual segments (34), **characterised in that** the baffles have deflector plates (30) which are arranged obliquely to the radial direction and which deflect a portion of the cooling medium out of the central regions of the segments (34) towards the webs (24).

2. Cooling ring according to claim 1, having a device (26, 28) for influencing segment by segment the flow speed and/or temperature of the cooling medium.

3. Cooling ring according to claim 1 or 2, wherein the outlet opening (23) is formed at the inner peripheral edge of the annular chamber (22) and each segment (34) is delimited by webs (24), which taper in a wedge-shaped manner towards the downstream end, and has a substantially constant width over the length thereof.

4. Cooling ring according to any one of the preceding claims, wherein a guiding plate (32), which extends parallel with the longitudinal axis (A) of the segment (34), adjoins each deflector plate (30) downstream.

5. Cooling ring according to any one of the preceding claims, wherein the baffles comprise straight guiding plates (40) which subdivide each segment (34) into a plurality of part-segments, and wherein at least one deflector plate (30) is arranged in each part-segment.

6. Cooling ring according to any one of the preceding claims, wherein the baffles (30, 32, 40) are arranged symmetrically relative to the longitudinal centre axis (A) of the relevant segment (34).

7. Cooling ring according to any one of claims 1 to 5, wherein there is an asymmetrical flow distribution (F, G) within each segment (34) downstream of the baffles (30, 32) and the baffles (30, 32) are arranged asymmetrically relative to the longitudinal centre axis of the relevant segment.

8. Cooling ring according to any one of the preceding claims, wherein each segment (34) has a plurality of deflector plates (30, 42) having different angles of pitch.

## Revendications

1. Anneau de refroidissement pour des installations à souffler des feuilles, comprenant une chambre annulaire (22) qui forme, sur un bord circonférentiel, un interstice de sortie (23) pour délivrer un agent de refroidissement à la feuille soufflée (14) et est divisée par des nervures radiales (24) en plusieurs segments (34), et comprenant des pièces rapportées (30, 32, 40) pour uniformiser l'écoulement de l'agent de refroidissement dans les segments individuels (34), **caractérisé en ce que** les pièces rapportées comportent des plaques de déflexion (30) qui sont disposées en biais par rapport à la direction radiale et qui dévient une partie de l'agent de refroidissement à partir des zones centrales respectives des segments (34) vers les nervures (24).

2. Anneau de refroidissement selon la revendication 1, comprenant un dispositif (26, 28) pour influer de manière segmentée sur la vitesse d'écoulement et/ou la température de l'agent de refroidissement.

3. Anneau de refroidissement selon la revendication 1 ou 2, dans lequel l'interstice de sortie (23) est formé sur le bord circonférentiel intérieur de la chambre annulaire (22), et chaque segment (34) est délimité par des nervures (24) convergeant en forme de coin vers l'extrémité aval et possède une largeur sensiblement constante sur toute sa longueur.

4. Anneau de refroidissement selon une des revendications précédentes, dans lequel une plaque de guidage (32) s'étendant parallèlement à l'axe longitudinal (A) du segment (34) se raccorde en aval à chaque plaque de déflexion (30).

5. Anneau de refroidissement selon une des revendications précédentes, dans lequel les pièces rapportées englobent des plaques de guidage rectilignes (40) qui divisent chaque segment (34) en plusieurs segments partiels, et dans lequel au moins une plaque de déflexion (30) est disposée dans chaque segment partiel.

6. Anneau de refroidissement selon une des revendications précédentes, dans lequel les pièces rapportées (30, 32, 40) sont disposées de manière symétrique par rapport à l'axe longitudinal médian (A) du segment concerné (34).

7. Anneau de refroidissement selon une des revendications 1 à 5, **caractérisé en ce qu'**à l'intérieur de chaque segment (34), en amont des pièces rapportées (30, 32), il se produit une répartition asymétrique d'écoulement (F, G), et les pièces rapportées (30, 32) sont disposées de manière asymétrique par rapport à l'axe longitudinal médian du segment concerné.

8. Anneau de refroidissement selon une des revendications précédentes, dans lequel chaque segment (34) comporte plusieurs plaques de déflexion (30, 42) avec des angles d'inclinaison différents.
